# DEMANDE DE BREVET EUROPEEN

(11) **EP 2 213 855 A1**
(43) Date de publication de la demande: **04.08.2010**
(21) Numéro de dépôt: 09178768.9
(22) Date de dépôt: 10.12.2009
(51) Int. Cl.: F01N 3/10, F01N 3/20

(54) **Ligne et procédé de tratement de gaz d'échappement**

(30) Priorité: 28.01.2009 FR 0950495
(71) Demandeur: Peugeot Citroën Automobiles SA, 78140 Vélizy-Villacoublay (FR)
(72) Inventeur: Quiney, Anne-Sophie, 75010 Paris (FR)
(74) Mandataire: Ménès, Catherine

(57) **Abrégé**

L'invention se rapporte à une ligne (12) de traitement des gaz d'échappement d'un moteur ayant un dispositif (16) de post-traitement des oxydes d'azote, un catalyseur (18) d'oxydation en amont du dispositif de post-traitement des oxydes d'azote, **caractérisé en ce que** la ligne comprend en outre, en amont du catalyseur d'oxydation, un catalyseur (20) de réaction de gaz à l'eau adapté à produire de l'hydrogène à partir des gaz d'échappement. L'invention permet d'améliorer le gain en consommation de carburant des moteurs grâce à la haute efficacité du traitement des NOx présents dans les gaz d'échappement.

## Description

La présente invention concerne une ligne d'échappement et un procédé de traitement des gaz d'échappement d'un moteur.

La combustion de combustible fossile comme le pétrole ou le charbon dans un système de combustion, en particulier le carburant dans un moteur, peut entraîner la production en quantité non négligeable de polluants qui peuvent être déchargés par l'échappement dans l'environnement et y causer des dégâts. Parmi ces polluants, les oxydes d'azote (appelés NOx) posent un problème particulier puisque ces gaz sont soupçonnés d'être un des facteurs qui contribuent à la formation des pluies acides et à la déforestation. En outre, les NOx sont liés à des problèmes de santé pour les humains et sont un élément clé de la formation de « smog » (nuage de pollution) dans les villes. La législation impose des niveaux de rigueur croissante pour leur réduction et/ou leur élimination de sources fixes ou mobiles.

On distingue deux situations de vie du moteur pour lesquelles des solutions pour le traitement des NOx différentes doivent être appliquées. Une première situation (qui concerne exclusivement les moteurs essence stratifiée) correspond à une combustion à richesse égale à 1 ou supérieure à 1. L'usage d'un catalyseur trois voies (ou en anglais TWC pour « Three Way Catalyst ») assure la dépollution des NOx à plus de 95%. Une deuxième situation (qui concerne les mélanges pauvre) correspond à une combustion à richesse inférieure à 1. Pour un moteur à essence, le catalyseur TWC n'assure plus la conversion des NOx. Pour un moteur Diesel, le catalyseur d'oxydation diesel (ou DOC) ne convertit pas les NOx (mais seulement les espèces CO et HC). Ces NOx non convertis sont donc à l'échappement et doivent être traités par un post-traitement dédié.

Des solutions de post-traitement ont été proposées. Par exemple, une solution ayant fait la preuve de son efficacité est l'utilisation d'une source d'ammoniac (NH₃), telle que l'urée aqueuse, qui est introduite dans les gaz d'échappement et qui réagit avec les NOₓ sur un catalyseur dans un système de post-traitement des NOx (DeNox) pour former de l'azote N₂ inerte et de l'eau H₂O. Cette solution est le principe de la SCR ou « Selective Catalytic Reduction » en anglais. Une telle solution présente des inconvénients. Par exemple, la quantité d'urée qui est embarquée à bord des véhicule est un facteur limitant car cette quantité doit être importante pour éviter à l'utilisateur de devoir remplir le réservoir ce qui génère une surcharge et inversement. Egalement, la température seuil (environ 180°) à partir de laquelle l'urée se transforme en ammoniac et la plage de température (de l'ordre de 180° à 500°) où le catalyseur SCR est actif limitent l'efficacité de conversion qui peut être atteinte par le principe de la SCR.

Une autre solution de post-traitement est le principe du piège à NOx qui permet de stocker les NOx sur un catalyseur puis de les réduire lors du passage en combustion riche. Les catalyseurs piège à NOx sont constitués de métaux précieux. D'autres inconvénients qui limitent l'efficacité du piège à NOx sont la température seuil (environ 250°) à partir de laquelle le piège à NOx est actif et la plage de température (de l'ordre de 180° à 500°) où le piège à NOx est actif.

Le document US 6 499 294 montre une ligne de traitement de gaz d'échappement comprenant un piège à NOx associé avec un catalyseur trois voies. Le catalyseur trois voies permet une réaction de gaz à l'eau par laquelle l'espèce H₂ est formée à partir de CO et H₂O dans une situation de ratio air-fuel riche.

Le document US 2008/0184701 montre une ligne d'échappement dans laquelle un catalyseur trois voies est utilisé mais qui peut être remplacé par un catalyseur de génération d'hydrogène dans une situation de ratio air-fuel riche.

L'inconvénient des dispositifs de ces deux documents est que la génération de H₂ n'est que ponctuelle, en fonction de la richesse du piège à NOx, ce qui réduit l'efficacité du traitement des NOx.

Le document WO 2006/034413 décrit l'usage d'un clapet en sortie du moteur pour envoyer les gaz directement sur un catalyseur de réaction de gaz à l'eau accolé à un piège à NOx. La génération d'hydrogène n'est encore une fois que ponctuelle lorsque les gaz sont dirigés vers le catalyseur, ce qui réduit l'efficacité du traitement des NOx.

II y a donc un besoin pour un traitement plus efficace des NOx.

Pour cela, l'invention propose une ligne de traitement des gaz d'échappement d'un moteur ayant un dispositif de post-traitement des oxydes d'azote et un catalyseur d'oxydation en amont du dispositif de post-traitement des oxydes d'azote, **caractérisé en ce que** la ligne comprend en outre, en amont du catalyseur d'oxydation, un catalyseur de réaction de gaz à l'eau adapté à produire de l'hydrogène à partir des gaz d'échappement.

Dans une variante, le catalyseur de réaction de gaz à l'eau est un site distinct du catalyseur d'oxydation.

Dans une variante, le catalyseur de réaction de gaz à l'eau est une couche catalytique déposée en entrée du catalyseur d'oxydation, de préférence par une méthode créant une variation de la charge catalytique selon différentes zones du catalyseur (zoning).

Dans une variante, le catalyseur d'oxydation est en outre un catalyseur de réduction des oxydes d'azote.

Dans une variante, le catalyseur d'oxydation est catalyseur d'oxydation Diesel.

Dans une variante, le dispositif de post-traitement des oxydes d'azote est un piège d'oxydes d'azote ou un dispositif de réduction des oxydes d'azote par l'ammoniac.

L'invention a également pour objet un véhicule comportant un moteur et une ligne de traitement des gaz d'échappement du moteur telle que définie précédemment.

L'invention a en outre pour objet un procédé de traitement des gaz d'échappement contenant des oxydes d'azote appliqué à la ligne de traitement des gaz d'échappement telle que définie précédemment, le procédé comprenant la production d'hydrogène par le catalyseur de réaction de gaz à l'eau, la réduction d'une partie des oxydes d'azote par l'hydrogène, et le traitement d'une autre partie des gaz d'échappement par le dispositif de post-traitement des oxydes d'azote.

D'autres caractéristiques et avantages de l'invention apparaîtront à la lecture de la description détaillée qui suit des modes de réalisation de l'invention, donnés à titre d'exemple uniquement et en références aux dessins qui montrent :

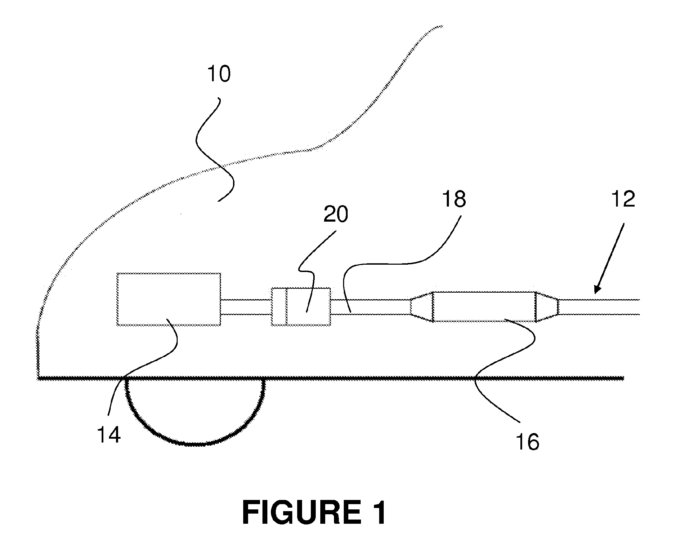

- figure 1, une vue schématique d'une ligne de traitement des gaz d'échappement.

L'invention se rapporte à une ligne de traitement des gaz d'échappement d'un moteur ayant un dispositif de post-traitement des oxydes d'azote et un catalyseur d'oxydation en amont du dispositif de post-traitement des oxydes d'azote (NOx). La ligne comporte en outre, en amont du catalyseur d'oxydation, un catalyseur de réaction de gaz à l'eau adapté à produire de l'hydrogène à partir des gaz d'échappement. Ainsi, une réduction préliminaire d'une partie des NOx est réalisée avec l'hydrogène comme réducteur, et ce, de manière permanente en complément du dispositif de post-traitement des oxydes d'azote dédié. La production d'hydrogène et la réduction des NOx est réalisée indépendamment de la richesse du ratio air-fuel. Ceci permet un de relâchement de la contrainte sur la libération de NOx du moteur ce qui peut être valorisé en termes de gain de consommation du moteur. Egalement, ceci permet une augmentation de l'efficacité totale de la conversion des NOx des gaz d'échappement et/ou un relâchement des contraintes sur le dispositif de post-traitement des NOx. Ainsi, l'invention permet d'améliorer le gain en consommation de carburant des moteurs grâce à la haute efficacité du traitement des NOx présents dans les gaz d'échappement.

La figure 1 montre un véhicule 10 avec une ligne 12 de traitement des gaz d'échappement. La ligne 12 comporte un moteur 14, par exemple du type Diesel ou à essence, libérant de gaz d'échappement.

La ligne 12 comporte un dispositif 16 de post-traitement des oxydes d'azote ou NOx. Le dispositif 16 permet de traiter les NOx émis dans les gaz d'échappement. Le dispositif 16 comporte par exemple un catalyseur de SCR (ou « Selective Catalytic Reduction ») qui permet de réduire les NOx par l'ajout d'un réducteur. Le réducteur classiquement utilisé est l'ammoniac (NH3), obtenu par pyrolyse / hydrolyse de l'urée dans ligne d'échappement selon les réactions suivantes :

(NH₂)2CO → HNCO + NH₃ : pyrolyse à 120°C

HNCO + H2O → CO₂ + NH₃ : hydrolyse à 180°C

Le catalyseur SCR sert à favoriser la réduction des NOx par NH3 selon les 3 réactions suivantes:

4NH₃ + 4NO + O₂ → 4N₂ + 6H₂O

2NH₃ + NO + NO₂ → 2N₂ + 3H₂O

8NH₃ + 6NO₂ → 7N₂ + 12H₂O

Alternativement, le dispositif 16 peut comporter un piège à NOx. Le piège à NOx permet de stocker les NOx sur un catalyseur puis de les réduire lors de passage en combustion riche. Les catalyseurs piège à NOx sont constitués de métaux précieux (Pt/Pd/Rh sur Baryum).

La ligne 12 comporte en outre, en amont du dispositif 16 dans le sens d'écoulement des gaz d'échappement, un catalyseur 18 d'oxydation. Le catalyseur 18 assure l'oxydation des espèces HC et CO contenus dans les gaz d'échappement. Le catalyseur 18 comporte des métaux précieux du type Platine (Pt), Palladium (Pd), Or (Au), des alliages de ces métaux. Le catalyseur 18 est par exemple un catalyseur d'oxydation Diesel. Le catalyseur 18 peut en outre permettre la réduction d'oxydes d'azote (NO et NO₂). Il peut s'agir d'un catalyseur trois voies (ou TWC pour « Three-Way Catalytic »). Le catalyseur 18 comporte alors en plus un métal précieux : le Rhodium (Rh).

La ligne 12 comporte en outre, en amont du dispositif 16 dans le sens d'écoulement des gaz d'échappement, un catalyseur 20 de réaction de gaz à l'eau adapté à produire de l'hydrogène à partir des gaz d'échappement. Le catalyseur 20 permet la production permanente d'hydrogène (H₂) qui est un fort réducteur des NOx. Ceci permet un gain en consommation du moteur 14, car même si le moteur est plus fortement émissif de NOx lorsque la consommation du moteur est réduite, Les NOx seront traités plus efficacement par les catalyseurs 16 à 20. La production permanente de H₂ qui est un fort réducteur de NOx permet de réduire les NOx même dans des situations de combustion à richesse inférieure à 1. On peut ainsi optimiser la consommation carburant de moteurs à combustion interne à mélange pauvre (moteur Diesel et moteur essence stratifiée (injection directe à mélange pauvre)).

Le catalyseur 20 permet de valoriser les gaz d'échappement contenant des espèces CO pour produire dans l'échappement le composé réducteur de NOx qu'est H₂. Le catalyseur 20 est un catalyseur dit de « water-gas-shift » (WGS) ou de réaction de gaz à l'eau permettant la réaction :

CO+ H₂0 → H₂ + CO₂ (1)

L'hydrogène H2 formé permet, dans un deuxième temps, de transformer les NOx (NO, NO₂) présents à l'échappement en N₂ (gaz inerte) par les réactions suivantes :

2H₂ +2NO → N₂ + 2H₂O (2)

4H₂ + 2NO₂ → N₂ + 4H₂O (3)

Les réactions (2) et (3) ont lieu grâce au catalyseur 18 situé en aval du catalyseur 20. En particulier, les réactions (2) et (3) ont lieu grâce aux métaux précieux du catalyseur 18. Grâce au traitement des NOx sur deux sites distincts que sont d'une part les catalyseurs 18 et 20 et d'autre part le dispositif 16, une certaine partie des NOx (NO, NO₂) est donc déjà convertie en amont du dispositif 16 de post-traitement dédié. L'implantation d'un site de production d'hydrogène, puissant réducteur de NOx, permet la réduction d'une partie des NOx. La disparition de ces NOx en amont du dispositif 16 permet de réduire la sévérité des contraintes sur le dispositif 16 et/ou d'augmenter la conversion totale des NOx.

Avec un catalyseur dédié, la réaction (1) a le meilleur taux de conversion autour de 300°C. Il s'agit d'une température typique de sortie de moteur. Par ailleurs, la réaction (1) est exothermique et génère de la chaleur favorable à l'amorçage du catalyseur 18 du type trois voies ou d'oxydation Diesel positionné en aval du catalyseur 20.

Les formulations du catalyseur 20 sont par exemple : CuZnAl, FeZnAl, Fe-Cr, Cu/CeO₂, Ni/CeO₂, Co/CeO₂, FeCeO₂, Ru/CeO₂, Ru/FeOx/CeO₂, Pt/CeO₂/Al₂O₃.

Le catalyseur 20 peut être un site distinct du catalyseur d'oxydation 18. Le catalyseur 20 peut faire l'objet d'une brique indépendante du catalyseur d'oxydation 18. Ceci permet de fabriquer facilement le catalyseur 20. Alternativement, le catalyseur 20 peut être une couche catalytique déposée en entrée du catalyseur 18 d'oxydation. Ceci permet de rendre l'ensemble catalyseur 20 et catalyseur 18 moins encombrant. La couche catalytique est par exemple déposée par une méthode de zoning.

## Revendications

1. Une ligne (12) de traitement des gaz d'échappement d'un moteur ayant un dispositif (16) de post-traitement des oxydes d'azote et un catalyseur (18) d'oxydation en amont du dispositif de post-traitement des oxydes d'azote, **caractérisé en ce que** la ligne comprend en outre, en amont du catalyseur d'oxydation, un catalyseur (20) de réaction de gaz à l'eau adapté à produire de l'hydrogène à partir des gaz d'échappement.

2. La ligne selon la revendication 1, dans laquelle le catalyseur (20) de réaction de gaz à l'eau est un site distinct du catalyseur d'oxydation.

3. La ligne selon la revendication 1, dans laquelle le catalyseur (20) de réaction de gaz à l'eau est une couche catalytique déposée en entrée du catalyseur d'oxydation.

4. La ligne selon la revendication 3, dans laquelle la couche catalytique est déposée par une méthode de zoning.

5. La ligne selon l'une des revendications précédentes, dans laquelle le catalyseur (18) d'oxydation est en outre un catalyseur de réduction des oxydes d'azote.

6. La ligne selon l'une des revendications 1 à 4, dans laquelle le catalyseur (18) d'oxydation est catalyseur d'oxydation Diesel.

7. La ligne selon l'une des revendications 1 à 6, dans laquelle le dispositif (16) de post-traitement des oxydes d'azote est un piège d'oxydes d'azote ou un dispositif de réduction des oxydes d'azote par l'ammoniac.

8. Un véhicule (10) comportant un moteur (14) et une ligne (12) de traitement des gaz d'échappement du moteur selon l'une des revendications précédentes.

9. Un procédé de traitement des gaz d'échappement contenant des oxydes d'azote appliqué à la ligne de traitement des gaz d'échappement selon l'une des revendications 1 à 7, le procédé comprenant la production d'hydrogène par le catalyseur de réaction de gaz à l'eau, la réduction d'une partie des oxydes d'azote par l'hydrogène, et le traitement d'une autre partie des gaz d'échappement par le dispositif de post-traitement des oxydes d'azote.
